# EUROPÄISCHE PATENTANMELDUNG

(11) **EP 1 564 442 A2**
(43) Veröffentlichungstag der Anmeldung: **17.08.2005**
(21) Anmeldenummer: 05100325.9
(22) Anmeldetag: 20.01.2005
(51) Int. Cl.: F16H 13/10

(54) **Zuschaltbarer Reibradantrieb für Nebenantriebe**

(30) Priorität: 12.02.2004 DE 102004006794
(71) Anmelder: ContiTech Antriebssysteme GmbH, 30165 Hannover (DE)
(72) Erfinder: Sattler, Heiko, Dr., 30175 Hannover (DE); Bederna, Christoph, Dr., 31515 Wunstorf (DE)

(57) **Zusammenfassung**

Die Erfindung betrifft einen zuschaltbaren Reibradantrieb mit Zwischenrad (3) für ein schaltbares Reibradgetriebe mit gegeneinander unverschieblich angeordneten Wellen (1, 11) für den Antrieb von Nebenaggregaten (4) von Verbrennungskraftmaschinen, bei dem eine Reibverbindung durch eine Verzahnung ersetzt ist, so dass nur noch eine Reibverbindung im Energiefluss notwendig ist. Die Verzahnung (10) des Zwischenrades (3) ist so angeordnet, dass sie zwischen den Reibflächen (7) des Zwischenrades (3) zurückspringt, damit das Zwischenrad (3) sowohl als Reibverbindung als auch als Zahnradverbindung Energie übertragen kann.

## Beschreibung

Die Erfindung betrifft einen zuschaltbaren Reibradantrieb mit Zwischenrad für ein schaltbares Reibradgetriebe mit gegeneinander unverschieblich angeordneten Wellen für den Antrieb von Nebenaggregaten von Verbrennungskraftmaschinen.

Derartige Antriebe dienen dazu, die Nebenaggregate der Verbrennungskraftmaschinen, wie Wasserpumpe, Servolenkungspumpe etc. bei Nichtgebrauch abschalten zu können um Energie zu sparen. Dabei sind die Achsen der abtreibenden und der anzutreibenden Aggregate meist zueinander unverschiebbar angeordnet, so dass sich die Abtriebswelle des Motores und die Antriebswellen der Aggregate nicht aufeinander zu bewegen lassen. Daher ist in diesen Fällen die Verwendung eines Zwischenrades erforderlich, welches für einen schaltbaren Energiefluß vom Motor zu den Nebenaggregaten zwischen Abtriebs- und Antriebswellen angeordnet ist und an diese Wellen angepreßt bzw. von diesen Wellen abgehoben wird.

Derartige Reibradgetriebe sind z.B. aus der DD 224 378 A1 bekannt. In dieser Schrift wird ein Reibradgetriebe beschrieben, bei dem Antriebswelle und Abtriebswelle in ihrer Lage zueinander unverschieblich angeordnet sind. Das Drehmoment der Antriebswelle wird über ein Reibrad und eine Zwischenwelle unter gleichzeitiger Drehzahluntersetzung auf die Abtriebswelle übertragen. Das Reibrad ist auf der Zwischenwelle drehfest angebracht und weist einen erheblich größeren Durchmesser als die Welle auf. Die Zwischenwelle mit dem Reibrad ist in einer Schwinge angeordnet, die verschwenk- und verdrehbar in einem das Getriebe umfassenden Gehäuse gelagert ist. Dabei ist das Reibrad mit der Antriebswelle in ständiger Reibverbindung und wird daher ständig von der Antriebswelle mitge dreht. In Eingriffsstellung wird die federkraftunterstützte Schwinge über einen Hebel so verlagert, dass die Zwischenwelle mit einem auf der Abtriebswelle drehfest angeordneten zweiten Reibrad, dem Abtriebsreibrad, eine Reibverbindung bildet und so die Abtriebswelle antreibt. In Ausrückstellung wird durch Verstellung des Hebels die Schwinge zurückverlagert, so dass die Zwischenwelle keinen Kontakt mehr mit dem Abtriebsreibrad hat.

Diese Lösung hat den Nachteil, dass die Drehmomentübertragung über zwei Reibverbindungen erfolgt, was einen geringen Wirkungsgrad und relativ geringe übertragbare Leistungen zur Folge hat. Es entsteht unerwünscht hoher, lastabhängiger Schlupf, welcher die Reibungszonen erwärmt, was in Grenzfällen zur vorzeitigen Zerstörung des Getriebes führen kann.

Der Erfindung liegt die Aufgabe zugrunde, einen zuschaltbaren Reibradantrieb der eingangs beschriebenen Art zu schaffen, der gegenüber den bekannten Lösungen einen verbesserten Wirkungsgrad und einen verminderten Schlupf aufweist.

Diese Aufgabe wird erfindungsgemäß dadurch gelöst, dass das Zwischenrad an seinem Aussenumfang mindestens eine umlaufende Reibfläche und mindestens eine umlaufende-Verzahnung aufweist, wobei die Verzahnung des Zwischenrades mit einer Außenverzahnung einer Getriebewelle oder eines auf dieser Getriebewelle drehfest angebrachten Getrieberades in ständig kämmender Verbindung steht und das Zwischenrad so gelagert ist, dass es durch Verschiebung oder Verdrehung seiner Lagerung mit seiner umlaufenden Reibfläche an ein weiteres, mindestens eine umlaufende Reibfläche aufweisendes, auf einer weiteren Getriebewelle drehfest angeordnetes Getrieberad oder direkt an die weitere, mindestens eine umlaufende Reibfläche aufweisende Getriebewelle anpreßbar oder abhebbar ist und dadurch ein Energiefluß zwischen dieser Getriebewelle und der ständig mit dem Zwischenrad in Eingriff stehenden Welle des Getriebes einstellbar oder unterbrechbar ist.

Der Vorteil der Erfindung liegt darin, dass nur noch eine Reibverbindung im Energiefluß notwendig ist. Die zweite Energieübertragungsstelle ist durch schlupffreie, formschlüssige Zahnradverbindungen ersetzt. Durch die Anordnung sowohl der Reibfläche als auch der Verzahnung auf dem Umfang nur eines Zwischenrades reicht ein Zwischenrad aus, um den Kraftfluß zwischen den Getriebewellen ein- bzw. auszuschalten. Auf ein Zwischengetriebe mit mehreren Zwischenrädern kann verzichtet werden.

In einer weiteren Ausführungsform der Erfindung weist das Zwischenrad zwei voneinader in Achsrichtung voneinander beabstandete umlaufende geschlossene Reibflächen auf, zwischen denen eine umlaufende Verzahnung angeordnet ist.

In einer weiteren Ausführungsform weist das Zwischenrad in Achsrichtung nebeneinanderliegend eine umlaufende geschlossene Reibfläche und eine umlaufende Verzahnung auf.

Durch die variable Anordnung der Reibflächen und Verzahnungen auf dem Aussenumfang des Zwischenrades ist vorteilhafterweise eine Anpassung des Reibradantriebes an eine große Variantenvielfalt von Getriebebauformen möglich.

In einer weiteren Ausführungsform der Erfindung weist das Zwischenrad eine umlaufende Verzahnung auf, deren Zähne kurz über dem Zahnfuß enden, so dass die Zähne keine Spitze, sondern jeweils eine dem Außenumfang angepaßt gewölbte Kopffläche aufweisen und die Summe aller Kopfflächen eine durch die Täler der Verzahnung unterbrochene umlaufende Reibfläche bildet.

Diese Lösung hat den Vorteil, dass die gesamte Breite des Zwischenrades sowohl für die Verzahnung als auch für die Reibfläche nutzbar ist.

Durch den Einsatz dieses erfindungsgemäßen Reibradantriebes wird der drehzahlsenkende Schlupf des Antriebes deutlich gesenkt. Die Schaltbarkeit ist durch den Einsatz mindestens einer herkömmlichen Reibverbindung an der Schaltstelle gewährleistet. Der Wirkungsgrad eines derartigen Antriebes ist gegenüber den bekannten Lösungen mit mehreren Reibverbindungen erheblich verbessert.

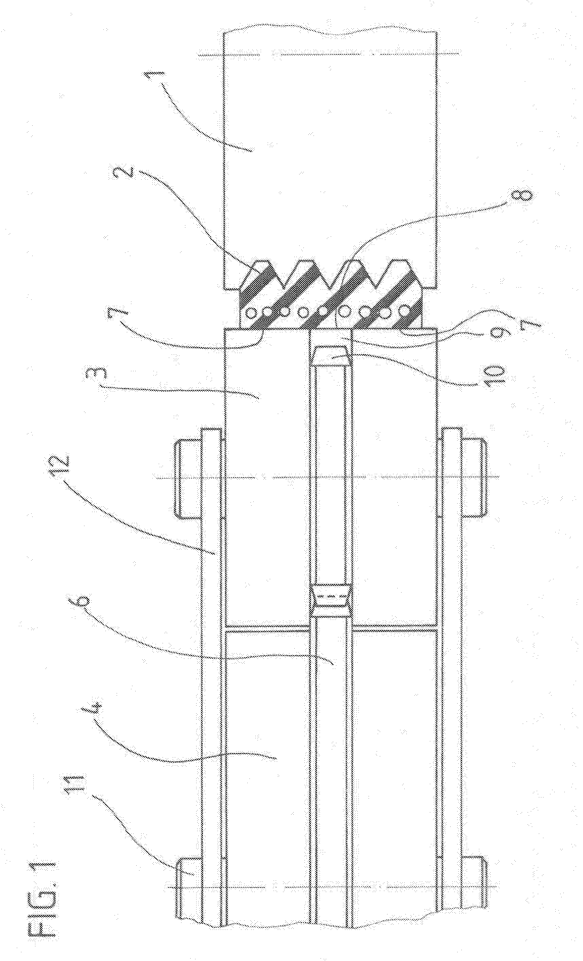

Anhand der Zeichnung wird nachstehend ein Ausführungsbeispiel der Erfindung näher erläutert. Die Figur zeigt einen Ausschnitt eines Reibradgetriebes mit einer Kurbelwelle 1, mit einem Keilrippenriemen 2, der um die Kurbelwelle 1 herumführt, mit einem Zwischenrad 3 und mit einem Antriebsrad 4 einer Wasserpumpe. Der Keilrippenriemen 2 treibt hier nicht gezeigte Nebenaggregate an. Das Antriebsrad 4 der Wasserpumpe weist eine Verzahnung 6 auf.

Das Zwischenrad 3 weist in Achsrichtung voneinander beabstandete umlaufende Reibflächen 7 auf, die mit dem Rücken 8 des Keilrippenriemens 2 in Reibverbindung stehen. In einer Nut 9 des Zwischenrades 3 ist eine Verzahnung 10 angebracht, die mit der Verzahnung 6 des Antriebsrades 4 der Wasserpumpe in ständigem Eingriff ist. Das Zwischenrad 3 ist in einer um die Achse 11 des Antriebsrades 4 schwenkbaren Schwinge 12 gelagert. Im in der Figur gezeigten Eingriffszustand dreht sich die Kurbelwelle 1. Das Zwischenrad 3 ist durch eine hier nicht gezeigte Feder oder einen anderen Mechanismus mit seinen Reibflächen 7 gegen den Rücken 8 des Keilrippenriemens 2 gedrückt. Dieser wird durch die Kurbelwelle 1 mitgenommen und versetzt das Zwischenrad 3 über den durch die zwischen den angepressten Reibflächen 7 und dem Rücken 8 des Keilrippenriemens 2 herrschende Reibung entstehenden Kraftschluß von diesem in eine Drehbewegung versetzt. Diese Drehbewegung überträgt das Zwischenrad 3 über die Verzahnungen 10 und 6 auf das Antriebsrad 4 der Wasserpumpe.

Zum Abschalten der Wasserpumpe wird die Schwinge 12 um die Achse 11 des Antriebsrades 4 gedreht. Das Zwischenrad 3 wird also um das Antriebsrad 4 herum geschwenkt und bleibt dadurch mit seiner Verzahnung 10 ständig in kämmender Verbindung mit der Verzahnung 6 des Antriebsrades 4. Durch das Verschwenken des Zwischenrades 3 heben die Reibflächen 7 des Zwischenrades 3 vom Rücken 8 des Keilrippenriemens 2 ab. Dadurch wird der Kraftschluß an dieser Stelle aufgehoben, das Zwischenrad 3 wird nicht mehr angetrieben und die Wasserpumpe bleibt stehen.

### Bezugszeichenliste

- 1: Kurbelwelle
- 2: Keilrippenriemen
- 3: Zwischenrad
- 4: Antriebsrad einer Wasserpumpe
- 6: Verzahnung des Antriebsrades 4
- 7: Reibflächen des Zwischenrades 3
- 8: Rücken des Keilrippenriemens 2
- 9: Nut des Zwischenrades 3
- 10: Verzahnung des Zwischenrades 3
- 11: Achse des Antriebsrades 4
- 12: Schwinge

## Patentansprüche

1. Zuschaltbaren Reibradantrieb mit Zwischenrad (3) für ein schaltbares Reibradgetriebe mit gegeneinander unverschieblich angeordneten Wellen für den Antrieb von Nebenaggregaten von Verbrennungskraftmaschinen, **gekennzeichnet dadurch, dass** das Zwischenrad (3) das Zwischenrad an seinem Aussenumfang mindestens eine umlaufende Reibfläche (7) und mindestens eine umlaufende Verzahnung (10) aufweist, wobei die Verzahnung (10) des Zwischenrades (3) mit einer Außenverzahnung (6) einer Getriebewelle (11) oder eines auf dieser Getriebewelle (11) drehfest angebrachten Getrieberades (4) in ständig kämmender Verbindung steht und das Zwischenrad (3) so gelagert ist, dass es durch Verschiebung oder Verdrehung seiner Lagerung (12) mit seiner umlaufenden Reibfläche (7) an ein weiteres, mindestens eine umlaufende Reibfläche aufweisendes, auf einer weiteren Getriebewelle drehfest angeordnetes Getrieberad oder direkt an die weitere, mindestens eine umlaufende Reibfläche aufweisende Getriebewelle anpreßbar oder abhebbar ist und **dadurch** ein Energiefluß zwischen dieser Getriebewelle und der ständig mit dem Zwischenrad (3) in Eingriff stehenden Welle (11) des Getriebes einstellbar oder unterbrechbar ist.

2. Zuschaltbaren Reibradantrieb nach Anspruch 1, **gekennzeichnet dadurch, dass** das Zwischenrad (3) in Achsrichtung nebeneinanderliegend eine umlaufende geschlossene Reibfläche (7) und eine umlaufende Verzahnung (10) aufweist.

3. Zuschaltbaren Reibradantrieb nach Anspruch 1, **gekennzeichnet dadurch, dass** das Zwischenrad (3) zwei in Achsrichtung voneinander beabstandete umlaufende geschlossene Reibflächen (7) aufweist, zwischen denen eine umlaufende Verzahnung (10) angeordnet ist.

4. Zuschaltbaren Reibradantrieb nach Anspruch 1, **gekennzeichnet dadurch, dass** das Zwischenrad (3) eine umlaufende Verzahnung aufweist, deren Zähne kurz über dem Zahnfuß enden, so dass die Zähne keine Spitze, sondern jeweils eine dem Außenum fang angepaßt gewölbte Kopffläche aufweisen und die Summe aller Kopfflächen eine durch die Täler der Verzahnung unterbrochene umlaufende Reibfläche bildet.
